# EUROPÄISCHE PATENTSCHRIFT

(11) **EP 2 105 701 B1**
(45) Veröffentlichungstag und Bekanntmachung des Hinweises auf die Patenterteilung: **17.10.2012**
(21) Anmeldenummer: 09004062.7
(22) Anmeldetag: 20.03.2009
(51) Int. Cl.: G01B 11/25

(54) **Verfahren und Vorrichtung zur Bestimmung der 3D-Koordinaten eines Objekts**
Method and device for determining the 3D coordinates of an object
Procédé et dispositif destinés à la détermination des coordonnées 3D d'un objet

(30) Priorität: 25.03.2008 DE 102008015499
(43) Veröffentlichungstag der Anmeldung: 30.09.2009
(73) Patentinhaber: Steinbichler Optotechnik GmbH, 83115 Neubeuern (DE)
(72) Erfinder: Mayer, Thomas, 83059 Kolbermoor (DE); Steinbichler, Marcus, Dr., 83115 Neubeuern (DE); Frey, Alexander, 83233 Bernau a. Chiemsee (DE)
(74) Vertreter: Zinnecker, Armin

(56) Entgegenhaltungen:
- EP-A- 0 445 618
- EP-A- 1 500 917
- WO-A-00/66973
- DE-A1- 4 142 676
- DE-A1-102005 043 753

## Beschreibung

Die Erfindung betrifft ein Verfahren zur Bestimmung der 3D-Koordinaten eines Objekts und eine Vorrichtung zur Durchführung eines derartigen Verfahrens.

Verfahren und Vorrichtungen zur dreidimensionalen Digitalisierung von Objekten sind bereits bekannt. Bei diesen Verfahren wird mit einem Projektor ein Muster auf das Objekt projiziert. Das Muster auf dem Objekt wird mit einer oder mehreren Kameras erfaßt. Projektor und Kamera oder Kameras können baulich in einen sogenannten 3D-Sensor integriert sein.

Vorbekannt ist insbesondere die dreidimensionale Digitalisierung von Objekten mittels Weißlicht-Streifenprojektion. Bei diesem Verfahren wird von einem Projektor ein Streifenbild auf das zu digitalisierende Objekt projiziert. Das Streifenbild auf dem Objekt wird dann von einer oder mehreren Kameras erfaßt. Daraus können für den vom Projektor ausgeleuchteten und von der Kamera oder den Kameras erfaßten Objektbereich die 3D-Koordinaten der Objektoberfläche bestimmt werden.

Um gute Meßergebnisse im Hinblick auf die dimensionelle Meßgenauigkeit und das Rauschen der Meßdaten zu erreichen, erfordert das Verfahren eine möglichst ideal diffus reflektierende Oberfläche (sogenannte Lambert'sche Fläche). In der Praxis weist das Objekt, dessen 3D-Koordinaten bestimmt werden sollen, jedoch oftmals eine glänzende Oberfläche auf, die das einfallende Licht nicht ideal diffus, sondern mehr oder weniger stark gerichtet reflektiert. Dies ist insbesondere bei geschliffenen oder polierten Metalloberflächen oder bei glänzenden Kunststoffoberflächen der Fall.

Um die damit verbundenen Probleme zu lösen ist es möglich, auf glänzende Oberflächen eine weiße, diffus reflektierende Schicht aufzutragen, um eine Bestimmung der 3D-Koordinaten mit einer möglichst hohen Qualität zu ermöglichen. Die Schicht kann mit einem Spray aufgetragen werden. Das Beschichten der Oberfläche des Objekts vor der Bestimmung der 3D-Koordinaten bringt jedoch verschiedene Nachteile mit sich: Es entsteht ein zusätzlicher Zeit- und Materialaufwand und damit Kosten für das Auftragen und gegebenenfalls das spätere Entfernen der Schicht von dem Objekt. Die Dicke der aufgetragenen Schicht kann die 3D-Koordinaten der zu bestimmenden Objektoberfläche verfälschen. Auf empfindliche Materialien kann keine zusätzliche Schicht aufgetragen werden, da hierdurch das Objekt beschädigt oder zerstört werden kann. Das Auftragen der Schicht erfolgt üblicherweise manuell und ist deshalb in einer Meßanlage, in der eine große Anzahl von Objekten automatisch vermessen werden soll, nicht praktikabel.

Bei der Bestimmung der 3D-Koordinaten eines Objekts mit einer glänzenden Oberfläche können durch das am Objekt gerichtet reflektierte Muster Meßfehler entstehen, wenn das reflektierte Licht an einer anderen Stelle wieder auf das Objekt fällt und das an dieser Stelle direkt auf das Objekt projizierte Licht überlagert. Dies ist insbesondere an Innenkanten des Objekts der Fall, bei dem das von einer Flanke der Innenkante reflektierte Licht zum Teil auf die gegenüberliegende Flanke der Innenkante fällt. Zur Veranschaulichung dieses Problems zeigt
- Fig. 1: eine Vorrichtung zur Bestimmung der 3D-Koordinaten eines Objekts mit einem Projektor und einer Kamera in einer schematischen Seitenansicht und
- Fig. 2: den Meßfehler an der Innenkante des Objekts gemäß Fig. 1 in einer schematischen Darstellung.

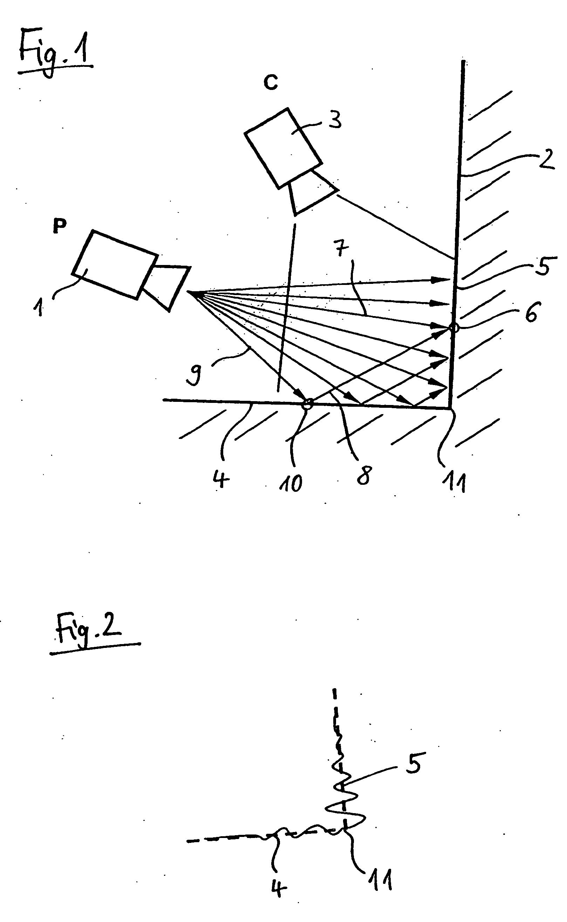

Die in Fig. 1 gezeigte Vorrichtung umfaßt einen Projektor 1 zum Projizieren eines Musters, insbesondere eines Streifenmusters, auf ein Objekt 2 und eine Kamera 3 zum Aufnehmen des von dem Objekt 2 reflektierten Musters. Die Oberfläche des Objekts 2 weist eine Innenkante auf, die eine horizontale Flanke 4 und eine vertikale Flanke 5 umfaßt, die in einem Inneneckpunkt 11 aufeinandertreffen. Das auf die horizontale Flanke 4 projizierte Licht aus dem Projektor 1 wird von der zumindest teilweise glänzenden Oberfläche der horizontalen Flanke 4 zum Teil diffus reflektiert und zu einem anderen Teil an die vertikale Flanke 5 gespiegelt. Der an die vertikale Flanke 5 gespiegelte Lichtanteil wird dort teilweise diffus reflektiert und teilweise erneut gespiegelt. Insbesondere der an der vertikalen Flanke 5 diffus reflektierte Anteil überlagert sich mit demjenigen Anteil des Lichts aus dem Projektor 1, der unmittelbar auf die vertikale Flanke 5 auftrifft und dort diffus reflektiert wird. Beide Lichtanteile gelangen in die Kamera 3 und verfälschen die Messung.

Beispielsweise gelangt an den Punkt 6 der Oberfläche der vertikalen Flanke 5 sowohl der unmittelbar aus dem Projektor auftreffende Lichtstrahl 7 als auch der gespiegelte Strahl 8 des zur horizontalen Flanke 4 gerichteten Lichtstrahls 9. Bei der Bilderfassung mit der Kamera 3 wird für den jeweiligen Objektpunkt die Intensität des direkt auf die Objektoberfläche projizierten Lichts und die Intensität des an dieser Stelle von der glänzenden Oberfläche gespiegelten Lichts eines anderen Objektpunkts (im gewählten Beispiel des Objektpunkts 10 auf der horizontalen Flanke 4, auf den der Lichtstrahl 9 auftrifft) detektiert.

Die Qualität der 3D-Koordinaten-Daten, die bestimmt werden sollen, ist umso schlechter, je größer der Anteil des nicht direkt vom Projektor projizierten, sondern indirekt am Objekt reflektierten Lichts ist. Dies ist in Fig. 2 am Beispiel der Innenkante der Fig. 1 schematisch dargestellt. Dort wird das Rauschen der Meßdaten durch die Amplitude der Schwingung symbolisiert. Das Rauschen der Meßdaten ist umso größer, je geringer der Abstand des jeweiligen Objektpunkts von dem Inneneckpunkt 11 der Innenkante ist. Die Fig. 2 zeigt den Meßfehler in einer überhöhten Darstellung, wobei die gemessenen Daten durch die durchgezogene Linie dargestellt werden und die Solldaten durch die gestrichelte Linie.

Aus der prioritätsälteren, nicht vorveröffentlichten DE-A-10 2006 048 234 ist ein Verfahren zur Bestimmung der 3D-Koordinaten eines Objekts bekannt, bei dem ein Streifenmuster auf das Objekt projiziert wird und das von dem Objekt reflektierte Muster aufgenommen und ausgewertet wird.

Ein Verfahren nach dem Oberbegriff des Anspruchs 1 ist aus WO 00/66973 A, bekannt.

Aufgabe der Erfindung ist es, ein verbessertes Verfahren und eine verbesserte Vorrichtung zur Bestimmung der 3D-Koordinaten eines Objekts vorzuschlagen.

Erfindungsgemäß wird diese Aufgabe bei einem Verfahren zur Bestimmung der 3D-Koordinaten eines Objekts durch die Merkmale des Anspruchs 1 gelöst. Bei dem Verfahren wird ein Muster, insbesondere ein Streifenmuster, auf das Objekt projiziert. Das von dem Objekt reflektierte Muster wird aufgenommen und ausgewertet. In einem ersten Schritt wird ein Muster auf einen ersten Teilbereich des Objekts projiziert und das von diesem Teilbereich des Objekts reflektierte Muster aufgenommen. In einem zweiten Schritt wird ein Muster auf einen zweiten Teilbereich des Objekts projiziert und das von diesem Teilbereich des Objekts reflektierte Muster aufgenommen. Die Teilbereiche sind derart gewählt, daß möglichst wenig oder gar kein indirektes Licht auf den jeweiligen Teilbereich fällt. Die aufgenommenen Muster werden ausgewertet. Die Auswertung kann bei jedem Schritt vorgenommen werden, und die ausgewerteten Bilder können zu einem Gesamtbild zusammengesetzt werden. Es ist allerdings auch möglich, zunächst die reflektierten Muster bei beiden Schritten aufzunehmen und gegebenenfalls zwischenzuspeichern und anschließend gemeinsam auszuwerten.

Für das erfindungsgemäße Verfahren können verschiedene Muster verwendet werden, insbesondere Streifenmuster. Die Streifenmuster können verschiedene Richtung, Frequenz (Streifenabstand, Periode) und/oder Amplitudenverlauf haben. Bei der oder den Kameras handelt es sich insbesondere um digitale Flächenkameras. Die Berechnung der 3D-Koordinaten des Objekts erfolgt üblicherweise in einem Auswerterechner durch die Auswertung der von der Kamera oder den Kameras aufgenommenen Bilder, insbesondere Streifenbilder. Hierbei können das Graycode-Verfahren, das Phasenshift-Verfahren, das Mehrwellenlängen-Verfahren oder ein sonstiges Verfahren oder eine Kombination dieser Verfahren zum Einsatz kommen.

Die Muster, insbesondere Streifenmuster, können in dem Projektor auf einem Glasdia aufgebracht sein. Es ist allerdings auch möglich, das Muster durch ein bildgebendes Element in dem Projektor auf das Objekt zu projizieren. Besonders geeignet sind bildgebende Elemente zur schnellen Musterprojektion. Das bildgebende Element kann ansteuerbar sein. Vorzugsweise ist das bildgebende Element pixelweise ansteuerbar. Durch die Verwendung eines bildgebenden Elements können kürzere Meßzeiten erreicht werden. Das Muster kann durch ein LCOS-display, ein Spiegelarray, ein DMD und/oder ein LCD-display auf das Objekt projiziert werden.

Die Teilbereiche auf dem Objekt sind derart gewählt , daß sie einander nicht oder nur geringfügig überlappen. Zusätzlich ist es vorteilhaft, wenn die Teilbereiche einen bestimmten Bereich des Objekts vollständig ausfüllen, wobei es sich bei diesem bestimmten Bereich vorzugsweise um den Bereich des Objekts handelt, für den die 3D-Koordinaten bestimmt werden sollen. Vorteilhaft ist es, wenn sich die Teilbereiche nicht überlappen und wenn die Teilbereiche einen bestimmten Bereich des Objekts vollständig ausfüllen. In diesem Fall wird das störende Licht minimiert. Gleichzeitig ist es möglich, die 3D-Koordinaten in dem gesamten bestimmten Bereich zu bestimmen.

Erfindungsgemäß ist vorgesehen, daß die Oberflächennormalen der Objektpunkte bestimmt werden und die Objektpunkte in Abhängigkeit ihrer Oberflächennormalen den Teilbereichen des Objekts zugeordnet werden. Das Reflexionsverhalten der Objektpunkte wird durch ihre Oberflächenormalen bestimmt. Deshalb werden die Objektpunkte in Abhängigkeit ihrer Oberflächennormalen den Teilbereichen des Objekts zugeordnet.

Erfindungsgemäß ist vorgesehen, daß die Verlängerung der Oberflächennormalen die jeweils rechts von dem Projektor verlaufen dem ersten Teilbereich zugeordnet werden und die Verlängerung der Oberflächennormalen die jeweils links von dem Projektor verlaufen dem zweiten Teilbereich zugeordnet werden. Der Vergleich zwischen der Oberflächennormalen eines Objektpunkts und des Projektionsstrahls zu diesem Objektpunkt ermöglicht die Erkennung von Innenkanten und damit eine Zuordnung der Objektpunkte zu den verschiedenen Teilbereichen in der Weise, daß störende Lichtreflexionen vermieden werden können.

Nach einer vorteilhaften Weiterbildung werden die 3D-Koordinaten des Objekts vor dem ersten und zweiten Schritt grob bestimmt.

Diese grobe Bestimmung der 3D-Koordinaten des Objekts erfolgt vorzugsweise in der Weise, daß ein Muster, insbesondere ein Streifenmuster, auf das Objekt projiziert wird und das von dem Objekt reflektierte Muster aufgenommen und ausgewertet wird. Auf der Grundlage der groben Bestimmung der 3D-Koordinaten des Objekts können die Teilbereiche für den ersten und zweiten Schritt bestimmt werden.

Nach einer weiteren vorteilhaften Weiterbildung erfolgt die grobe Bestimmung der 3D-Koordinaten des Objekts dadurch, daß die 3D-Koordinaten des Objekts aus einem Speicher abgerufen werden. Die 3D-Koordinaten des Objekts sind in dem Speicher vorzugsweise in Form eines CAD-Datensatzes abgelegt. Besonders vorteilhaft kann es sein, wenn die 3D-Koordinaten des Objekts zunächst in der Weise grob bestimmt werden, daß ein Muster, insbesondere ein Streifenmuster, auf das Objekt projiziert wird und das von dem Objekt reflektierte Muster aufgenommen und ausgewertet wird und wenn anschließend in dem Teilbereich, in dem die 3D-Koordinaten des Objekts auf diese Weise nicht hinreichend grob bestimmt werden konnten, die 3D-Koordinaten aus einem Speicher abgerufen werden, vorzugsweise in Form von CAD-Daten.

Eine erfindungsgemäße Vorrichtung zur Bestimmung der 3D-Koordinaten eines Objekts umfaßt einen Projektor zum Projizieren eines Musters, insbesondere eines Streifenmusters, auf das Objekt, eine Kamera zum Aufnehmen des von dem Objekt reflektierten Musters und eine Auswerteeinrichtung zum Auswerten des aufgenommenen Musters. Die Vorrichtung umfaßt ferner eine Einrichtung zum Projizieren eines Musters auf einen ersten Teilbereich des Objekts und zum Projizieren eines Musters auf einen zweiten Teilbereich des Objekts.

Die Vorrichtung umfaßt ferner eine Einrichtung konfiguriert zum Bestimmen der Oberflächennormalen der Objektpunkte und konfiguriert zum Zuordnen der Objektpunkte zu den Teilbereichen des Objekts in Abhängigkeit ihrer Oberflächennormalen.

Ferner umfaßt die Vorrichtung eine Einrichtung konfiguriert zum Zuordnen der Objektpunkte zu den Teilbereichen derart, daß die Verlängerung der Oberflächennormalen die jeweils rechts von dem Projektor verlaufen dem ersten Teilbereich zugeordnet werden und die Verlängerung der Oberflächennormalen die jeweils links von dem Projektor verlaufen dem zweiten Teilbereich zugeordnet werden.

Die Vorrichtung umfaßt vorzugsweise eine Einrichtung zum groben Bestimmen der 3D-Koordinaten des Objekts vor dem ersten und zweiten Schritt. Diese Einrichtung umfaßt vorzugsweise einen Projektor zum Projizieren eines Musters auf das Objekt, eine Kamera zum Aufnehmen des von dem Objekt reflektierten Musters und eine Auswerteinrichtung zum Auswerten des aufgenommenen Musters. Stattdessen oder zusätzlich kann die Einrichtung zum groben Bestimmen der 3D-Koordinaten des Objekts vor dem ersten und zweiten Schritt einen Speicher umfassen, aus dem die 3D-Koordinaten des Objekts abgerufen werden, wobei die 3D-Koordinaten des Objekts in dem Speicher vorzugsweise in Form eines CAD-Datensatzes gespeichert sind.

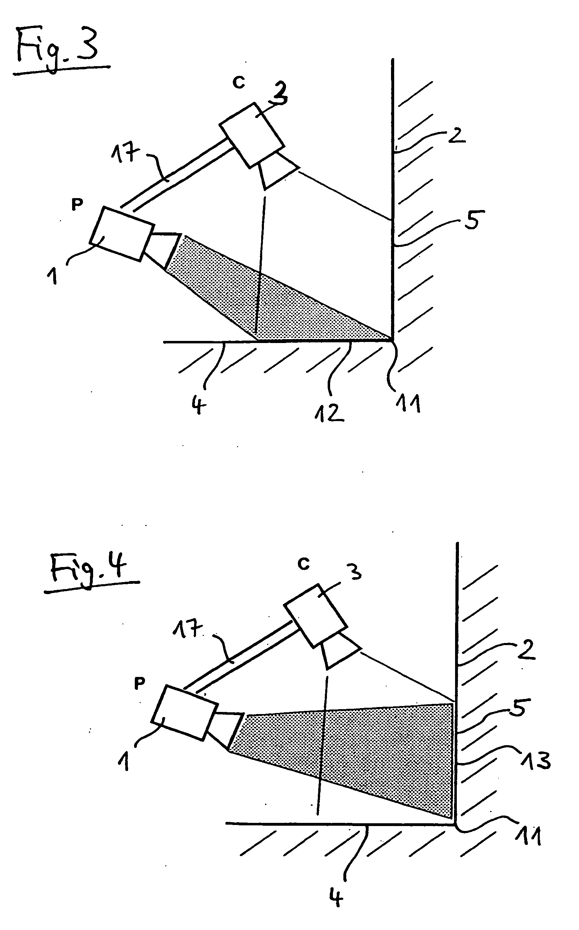

Ausführungsbeispiele der Erfindung werden nachstehend anhand der beigefügten Zeichnung im einzelnen erläutert. In der Zeichnung zeigt
- Fig. 3: eine Vorrichtung zur Bestimmung der 3D-Koordinaten eines Objekts mit einem Projektor und einer Kamera in einer schematischen Seitenansicht, wobei ein Muster auf einen ersten Teilbereich des Objekts projiziert wird,
- Fig. 4: die Vorrichtung gemäß Fig. 3, wobei ein Muster auf einen zweiten Teilbereich des Objekts projiziert wird,

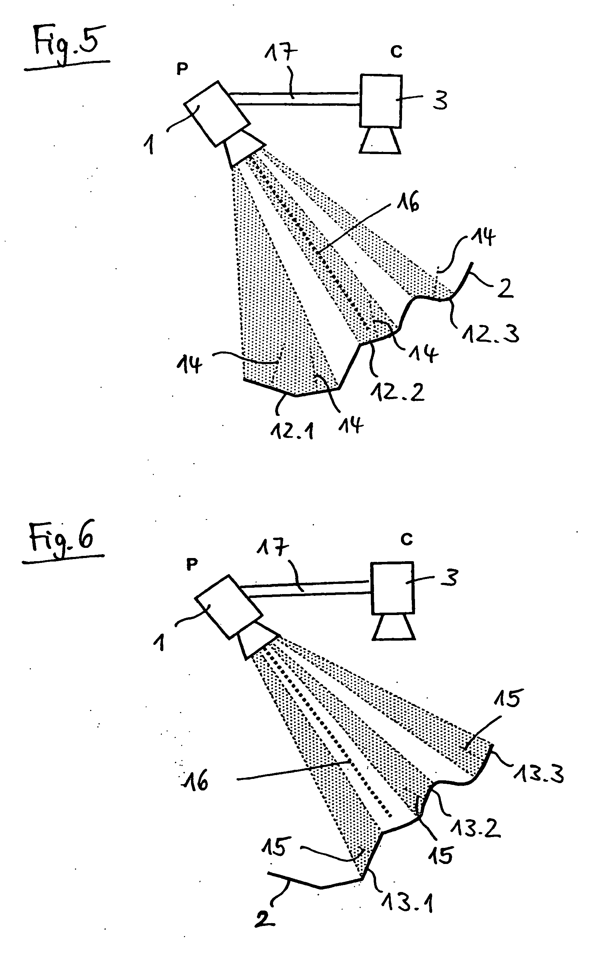

- Fig. 5: die Vorrichtung gemäß Fig. 3 und 4 zur Bestimmung der 3D-Koordinaten eines anderen Objekts, wobei ein Muster auf einen ersten Teilbereich des Objekts projiziert wird,
- Fig. 6: die Vorrichtung gemäß Fig. 3 bis 5, wobei ein Muster auf einen zweiten Teilbereich des Objekts gemäß Fig. 5 projiziert wird, und

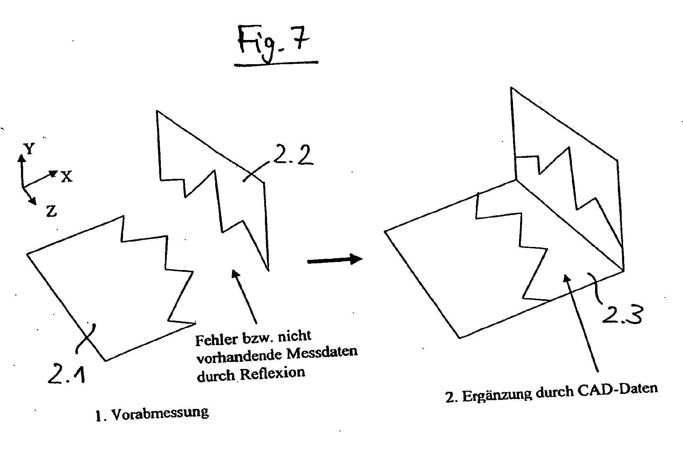

- Fig. 7: ein weiteres Objekt, dessen 3D-Koordinaten in einem Teilbereich durch die Projektion eines Musters und die Aufnahme und Auswertung des reflektierten Musters und in einem weiteren Teilbereich durch einen Abruf aus einem Speicher grob bestimmt werden.

Die in Fig. 3 gezeigte Vorrichtung zur Bestimmung der 3D-Koordinaten eines Objekts 2 entspricht im wesentlichen derjenigen nach Fig. 1. Sie umfaßt einen Projektor 1 zum Projizieren eines Streifenmusters auf das Objekt 2, eine Kamera 3 zum Aufnehmen des von dem Objekt 2 reflektierten Streifenmusters und eine in der Zeichnung nicht dargestellte Auswerteeinrichtung zum Auswerten des aufgenommenen Musters. Der Projektor 1 und die Kamera 3 sind durch ein Bauteil 17, beispielsweise ein Gehäuse oder einen Bestandteil eines Gehäuses, miteinander verbunden, so daß die relative Lage des Projektors 1 zur Kamera 3 unverändert bleibt.

Das Verfahren zur Bestimmung der 3D-Koordinaten des Objekts 2 wird in der Weise durchgeführt, daß zunächst die 3D-Koordinaten des Objekts 2 grob bestimmt werden, und zwar dadurch, daß von dem Projektor 1 ein Streifenmuster auf das gesamte Objekt 2 projiziert wird und daß das von dem gesamten Objekt 2 reflektierte Muster von der Kamera 3 aufgenommen und ausgewertet wird.

Anschließend wird in einem ersten Schritt ein Streifenmuster auf einen ersten Teilbereich 12 des Objekts projiziert und das von diesem Teilbereich 12 reflektierte Muster aufgenommen und ausgewertet. Der erste Teilbereich 12 befindet sich auf der horizontalen Flanke 4 des Objekts 2 und reicht bis zum Inneneckpunkt 11.

In einem zweiten Schritt, der in Fig. 4 gezeigt ist, wird von dem Projektor 1 ein Streifenmuster auf einen zweiten Teilbereich 13 des Objekts 2 projiziert und das von diesem Teilbereich 13 reflektierte Muster von der Kamera 3 aufgenommen und ausgewertet. Der zweite Teilbereich 13 befindet sich auf der vertikalen Flanke 5 des Objekts 2. Er reicht bis zum Inneneckpunkt 11.

Die Teilbereiche 12, 13 befinden sich auf verschiedenen Seiten der vom Inneneckpunkt 11 gebildeten Innenkante des Objekts 2. Wie aus Fig. 3 und 4 ersichtlich ist es möglich, daß jeweils nur auf einen Teilbereich 12, 13 des Objekts 2 ein Muster projiziert wird, daß die Kamera 3 jedoch in beiden Fällen jeweils das gesamte Objekt 2 aufnimmt. Die Auswertung erfolgt allerdings in der Weise, daß bei der Projektion des Musters auf den ersten Teilbereich 12 gemäß Fig. 3 nur dieser erste Teilbereich 12 ausgewertet wird und daß bei der Projektion des Musters auf den zweiten Teilbereich 13 gemäß Fig. 4 nur das von diesem Teilbereich 13 des Objekts 2 reflektierte Muster ausgewertet wird. Die Auswertung kann jeweils unmittelbar bei oder nach der Aufnahme des jeweiligen Teilbereichs 12, 13 erfolgen. Die Auswertungen können sofort oder später zu einem Gesamtbild zusammengesetzt werden. Es ist allerdings auch möglich, die Aufnahmen der Teilbereiche 12 und/oder 13 zunächst zu speichern und danach gemeinsam auszuwerten.

Fig. 5 und 6 zeigen ein anderes Objekt, dessen 3D-Koordinaten mit derselben Vorrichtung wie bei Fig. 1, 3 und 4 bestimmt werden. Auch hier werden die 3D-Koordinaten des Objekts 2 zunächst grob bestimmt, indem von dem Projektor 1 ein Muster auf das Objekt 2 projiziert wird und das von dem Objekt 2 reflektierte Muster von einer Kamera 3 aufgenommen und ausgewertet wird.

Auf der Grundlage der so grob ermittelten 3D-Koordinaten werden die Oberflächennormalen der Objektpunkte bestimmt. Die Objektpunkte werden in Abhängigkeit ihrer Oberflächennormalen verschiedenen Teilbereichen des Objekts 2 zugeordnet. Dies erfolgt in der Weise, daß die Oberflächennormalen der Objektpunkte des ersten Bereichs und des zweiten Bereichs auf verschiedenen Seiten der Projektionsstrahlen liegen.

Der erste Teilbereich 12 ist in Fig. 5 gezeigt. Dieser Teilbereich besteht aus drei Unterbereichen 12.1, 12.2 und 12.3. Die Flächennormalen für Objektpunkte in diesen Unterbereichen sind mit der Bezugsziffer 14 versehen. Ihre Verlängerungen liegen jeweils rechts von dem Projektor 1.

In Fig. 6 ist der zweite Teilbereich 13 dargestellt, der aus den Unterbereichen 13.1, 13.2 und 13.3 besteht. Die Flächennormalen in diesen Unterbereichen sind mit der Bezugsziffer 15 versehen. Die Verlängerungen der Flächennormalen 15 liegen jeweils links von dem Projektor 1. Demzufolge liegen die Oberflächennormalen der Objektpunkte des ersten Teilbereichs 12 und des zweiten Teilbereichs 13 auf verschiedenen Seiten der Projektionsstrahlen 16, die von dem Projektor 1 zum jeweiligen Objektpunkt verlaufen.

Wie aus Fig. 5 und 6 ersichtlich werden die Objektpunkte in Abhängigkeit ihrer Oberflächennormalen den Teilbereichen 12, 13 des Objekts 2 zugeordnet. Oberflächennormalen, die rechts neben dem Projektor 1 verlaufen, können als positive Oberflächennormalen bezeichnet werden, da sie zwischen sich und dem Projektionsstrahl, der vom Projektor 1 zum jeweiligen Objektpunkt führt, einen positiven Winkel einschließt. In entsprechender Weise kann Oberflächennormalen, die links an dem Projektor 1 vorbeilaufen, ein negativer Winkel zugeordnet werden. Die Objektpunkte mit einem positiven Winkel der Oberflächennormalen 14 werden dem ersten Teilbereich 12 zugeordnet, die Objektpunkte mit einem negativen Winkel der Oberflächennormalen 15 werden dem zweiten Teilbereich 13 zugeordnet. Auf diese Weise kann jeder Objektpunkt einem Teilbereich 12, 13 zugeordnet werden. Die Teilbereiche 12, 13 überlappen sich nicht. Sie füllen den gesamten Bildbereich, also den gesamten auszuwertenden Bereich des Objekts 2 vollständig aus. Durch die Zuordnung der Objektpunkte in Abhängigkeit ihrer Oberflächennormalen können Innenkanten des Objekts, die ansonsten störende Reflexionen hervorrufen würden, zuverlässig erkannt werden.

Fig. 7 zeigt ein Ausführungsbeispiel, bei dem die 3D-Koordinaten eines Objekts 2 in einem Speicher abgelegt sind, und zwar in Form eines CAD-Datensatzes. Zunächst werden die 3D-Koordinaten des Objekts 2 grob bestimmt, nämlich dadurch, daß ein Muster auf das Objekt 2 projiziert wird und das von dem Objekt 2 reflektierte Muster aufgenommen und ausgewertet wird. Da das Objekt 2 eine Innenkante aufweist, können die 3D-Koordinaten zunächst nicht hinreichend genau bestimmt werden. Sie werden nur in den Teilbereichen 2.1 und 2.2 hinreichend genau bestimmt, nicht jedoch in dem dem Inneneckpunkt 11 benachbarten Bereich.

Die grobe Bestimmung der 3D-Koordinaten in diesem dem Inneneckpunkt 11 benachbarten Bereich 2.3 erfolgt dadurch, daß die 3D-Koordinaten des Objekts 2 für diesen Bereich aus dem Speicher abgerufen werden. Auf diese Weise können die 3D-Koordinaten des gesamten Objekts 2 grob bestimmt werden, wie aus der rechten Abbildung von Fig. 7 ersichtlich.

Danach wird das bereits beschriebene Verfahren durchgeführt, bei dem die Oberflächennormalen der Objektpunkte bestimmt werden, die Objektpunkte in Abhängigkeit ihrer Oberflächennormalen verschiedenen Teilbereichen des Objekts zugeordnet werden, in einem ersten Schritt ein Muster auf einen ersten Teilbereich des Objekts projiziert und das von diesem Teilbereich des Objekts reflektierte Muster aufgenommen und ausgewertet wird und in einem zweiten Schritt ein Muster auf den zweiten Teilbereich des Objekts projiziert und das von diesem Teilbereich des Objekts reflektierte Muster aufgenommen und ausgewertet wird.

Durch die Erfindung wird ein Verfahren geschaffen, mit dem die Meßfehler des durch das Objekt reflektierten Projektorlichts ausgeschlossen werden können, indem eine an das zu messende Objekt adaptierte Projektion realisiert wird. Die adaptierte Projektion kann über ein im Projektor integriertes bildgebendes Element (LCD, LCOS, DMD, Dia) erzeugt werden.

Das Verfahren kann in folgender Weise durchgeführt werden: Es erfolgt eine Vorabmessung des Objekts zur Ermittlung der groben 3D-Daten der zu digitalisierenden Oberfläche. Die auf diese Weise gemessene Objektoberfläche wird derart in Objektbereiche segmentiert, daß die Winkel der Oberflächennormalen in jedem 3D-Meßpunkt zum Projektor bestimmt werden und daß Oberflächenbereiche in zwei oder mehr Klassen eingeteilt werden, wobei Oberflächenbereiche mit ähnlicher Ausrichtung der Oberflächennormalen zum Projektor in die gleiche Klasse eingeteilt werden. Jeder gemessene Oberflächenpunkt wird in das Bildkoordinatensystem des Projektors zurückgerechnet, um das zugehörige Bildelement des bildgebenden Elements im Projektor (LCD, LCOS, DMD) zu bestimmen. Anschließend werden zwei oder mehrere Digitalisierungen der Objektoberfläche zeitlich nacheinander mit adaptierter Projektion derart durchgeführt, daß vom Projektor jeweils nur Licht an die Objektbereiche projiziert wird, die in die gleiche Klasse eingeteilt wurden, und daß an andere Objektbereiche kein Licht vom Projektor projiziert wird. Die Kamera kann die gesamte Objektoberfläche erfassen. Es ist allerdings auch möglich, daß die Kamera nur die gewünschten Objektbereiche erfaßt. Schließlich werden die 3D-Daten jeder einzelnen Messung in einen gemeinsamen 3D-Datensatz der Objektoberfläche zusammengesetzt.

Wenn die Geometrie des Objekts bekannt ist, beispielsweise in einem CAD-Datensatz, kann das Verfahren wie folgt durchgeführt werden: Zunächst erfolgt, wie oben beschrieben, eine Vorabmessung des Objekts zur Ermittlung der groben 3D-Daten der zu digitalisierenden Oberfläche. Anschließend wird die Ausrichtung der groben 3D-Daten zum gespeicherten CAD-Datensatz bestimmt, und zwar durch geeignete Matchingalgorithmen. Dadurch kann die Position der Kamera bzw. die Position des aus Projektor und Kamera bestehenden Sensors im Raum bestimmt werden. Anschließend erfolgt die Bestimmung des durch die Aufnahme abgedeckten Bereichs in den CAD-Daten durch die Simulation des Sensors, also die Bestimmung der Bereiche, die von Kamera und Projektor gleichzeitig abgedeckt werden und geeignete Kriterien besitzen. Die simulierten Daten und die 3D-Daten der ersten Vorabmessung können kombiniert werden, um Abweichungen des realen Objekts vom CAD-Datensatz zu berücksichtigen. Dabei werden nur die Fehlstellen in den 3D-Daten durch simulierte Daten ergänzt. Die gesamte nachfolgende Berechnung kann allerdings auch ausschließlich auf der Grundlage von CAD-Daten erfolgen, um die Berechnungszeit zu reduzieren. Schließlich wird der oben beschriebene Ablauf durchgeführt, beginnend mit der Segmentierung der gemessenen Objektoberfläche in verschiedene Objektbereiche.

Bei der Vorgehensweise nach Fig. 3 und 4 wird eine Innenkante eines Meßobjekts gemessen. Die Messung besteht aus zwei Einzelmessungen, die nachfolgend zu einem Gesamtdatensatz zusammengesetzt werden. Durch die zeitlich getrennte Musterprojektion auf die beiden Innenkantenbereiche werden störende Reflexionen vermieden.

Bei der Ausführungsform nach Fig. 5 und 6 wird ein frei geformtes Objekt gemessen. Die Messung besteht aus zwei Einzelmessungen, wobei Objektbereiche mit ähnlicher Ausrichtung der Flächennormale zur optischen Achse des Projektors getrennt gemessen werden, um störende Reflexionen zu vermeiden.

Bei der Ausführungsform nach Fig. 7 werden CAD-Daten eingesetzt, um ein vollständiges Modell zu erhalten und daraus die Projektionssequenzen abzuleiten.

Die Erfindung schafft ein Verfahren und eine Vorrichtung zur 3D-Digitalisierung von Oberflächen, bestehend aus einem Projektor und einer oder mehreren Kameras mit einem Meßablauf mit adaptierter Lichtprojektion zur Vermeidung von störenden Lichtreflexionen am Meßobjekt zur Qualitätsverbesserung der gemessenen Objektdaten. In einer ersten Meßsequenz können die groben 3D-Daten des Meßobjekts bestimmt werden. In einem Berechnungsschritt können die Oberflächennormalen der gemessenen Objektpunkte berechnet und deren Ausrichtung zum Projektor bestimmt werden und Oberflächenbereiche in mindestens zwei Klassen eingeteilt werden. Optional vorliegende CAD-Daten können zur Bestimmung der Oberflächennormalen und deren Ausrichtung zum Projektor durch Simulation verwendet werden, um damit Fehlstellen in der ersten Meßsequenz ausgleichen zu können und die Berechnungszeiten zu reduzieren. In mindestens zwei weiteren Meßsequenzen werden die Oberflächenkoordinaten der jeweiligen Objektbereiche getrennt voneinander über eine an das Objekt adaptierte Projektion gemessen. Die adaptierte Lichtprojektion kann mit Hilfe eines bildgebenden Elements (LCD, LCOS, DMD, Dia) realisiert werden. Die adaptierte Lichtprojektion kann derart durchgeführt werden, daß, abhängig von der Oberflächennormalen des Meßobjekts, die Intensität des vom Projektor auf die jeweilige Objektposition projizierten Lichts angepaßt wird. Die Auswertung kann derart erfolgen, daß die Objektkoordinaten aus den einzelnen Meßsequenzen zu einem Datensatz zusammengefaßt werden.

## Patentansprüche

1. Verfahren zur Bestimmung der 3D-Koordinaten eines Objekts (2), bei dem ein Muster auf das Objekt (2) projiziert (1) wird und das von dem Objekt (2) reflektierte Muster aufgenommen (3) und ausgewertet wird, bei dem in einem ersten Schritt ein Muster auf einen ersten Teilbereich (12) des Objekts (2) projiziert wird und das von diesem Teilbereich (12) des Objekts reflektierte Muster aufgenommen wird, in einem zweiten Schritt ein Muster auf einen zweiten Teilbereich (13) des Objekts (2) projiziert wird und das von diesem Teilbereich (13) des Objekts (2) reflektierte Muster aufgenommen wird und die aufgenommenen Muster ausgewertet werden,
und bei dem die Oberflächennormalen (14, 15) der Objektpunkte bestimmt werden,
**dadurch gekennzeichnet**
**daß** die Objektpunkte in Abhängigkeit ihrer Oberflächennormalen (14, 15) vor dem ersten und zweiten Schritt den Teilbereichen (12, 13) des Objekts (2) zugeordnet werden, wobei die Verlängerung der Oberflächennormalen die jeweils rechts von dem Projektor verlaufen dem ersten Teilbereich zugeordnet werden und die Verlängerung der Oberflächennormalen die jeweils links von dem Projektor verlaufen dem zweiten Teilbereich zugeordnet werden und wobei die Teilbereiche (12, 13) auf dem Objekt (2) derart gewählt sind, daß sie einander nicht oder nur geringfügig überlappen.

2. Verfahren nach Anspruch 1, **dadurch gekennzeichnet, daß** die 3D-Koordinaten des Objekts (2) vor dem ersten und zweiten Schritt grob bestimmt werden.

3. Verfahren nach Anspruch 2, **dadurch gekennzeichnet, daß** die grobe Bestimmung der 3D-Koordinaten des Objekts dadurch erfolgen, daß ein Muster auf das Objekt (2) projiziert (1) wird und das von dem Objekt (2) reflektierte Muster aufgenommen (3) und ausgewertet wird.

4. Verfahren nach Anspruch 2 oder 3, **dadurch gekennzeichnet, daß** die grobe Bestimmung der 3D-Koordinaten des Objekts (2) dadurch erfolgt, daß die 3D-Koordinaten des Objekts (2) aus einem Speicher abgerufen werden.

5. Vorrichtung zur Bestimmung der 3D-Koordinaten eines Objekts (2) mit einem Projektor (1) zum Projizieren eines Musters auf das Objekt (2), einer Kamera (3) zum Aufnehmen des von dem Objekt (2) reflektierten Musters, einer Auswerteeinrichtung zum Auswerten des aufgenommenen Musters und eine Einrichtung zum Projizieren eines Musters auf einen ersten Teilbereich (12) des Objekts (2) und zum Projizieren eines Musters auf einen zweiten Teilbereich (13) des Objekts (2),
**gekennzeichnet durch**
eine Einrichtung Konfiguriert zum Bestimmen der Oberflächennormalen (14, 15) der Objektpunkte und Konfiguriert zum Zuordnen der Objektpunkte zu den Teilbereichen des Objekts (2) in Abhängigkeit ihrer Oberflächennormalen (14, 15) derart, daß die Verlängerung der Oberflächennormalen die jeweils rechts von dem Projektor verlaufen dem ersten Teilbereich zugeordnet werden und die Verlängerung der Oberflächennormalen die jeweils links von dem Projektor verlaufen dem zweiten Teilbereich zugeordnet werden, wobei die Teilbereiche (12, 13) auf dem Objekt (2) derart gewählt sind, daß sie einander nicht oder nur geringfügig überlappen.

6. Vorrichtung nach Anspruch 5, **gekennzeichnet durch** eine Einrichtung Konfiguriert zum groben Bestimmen der 3D-Koordinaten des Objekts.

7. Vorrichtung nach Anspruch 6, **gekennzeichnet durch** einen Speicher zum Speichern der 3D-Koordinaten des Objekts.

## Claims

1. A method for the determination of the 3D coordinates of an object (2) in which a pattern is projected (1) onto the object (2) and the pattern reflected by the object (2) is taken (3) and evaluated, wherein, in a first step, a pattern is projected onto a first part region (12) of the object (2) and the pattern reflected by this part region (12) of the object is taken, in a second step, a pattern is projected onto a second part region (13) of the object (2) and the pattern reflected by this part region (13) of the object (2) is taken, and the taken patterns are evaluated and wherein the surface normals (14, 15) of the object points are determined,
**characterized in that**
the object points are associated with the part regions (12, 13) of the object (2) in dependence on their surface normals (14, 15) before the first and second steps, wherein the extension of the surface normals which each extend to the right next to the projector are associated with the first part region and the extension of the surface normals which each extend to the left next to the projector are associated with the second part region and wherein the part regions (12, 13) on the object (2) are selected so that they do not overlap one another or only overlap one another slightly.

2. A method in accordance with claim 1, **characterized in that** the 3D coordinates of the object (2) are roughly determined before the first and second steps.

3. A method in accordance with claim 2, **characterized in that** the rough determination of the 3D coordinates of the object takes place **in that** a pattern is projected (1) onto the object (2) and the pattern reflected by the object (2) is taken (3) and evaluated.

4. A method in accordance with either of claims 2 or 3, **characterized in that** the rough determination of the 3D coordinates of the object (2) is carried out **in that** the 3D coordinates of the object (2) are called up from a memory.

5. An apparatus for the determination of the 3D coordinates of an object (2) comprising a projector (1) for the projection of a pattern onto the object (2), a camera (3) for the taking of the pattern reflected by the object (2), an evaluation device for the evaluation of the taken pattern and a device for the projection of a pattern onto a first part region (12) of the object (2) and for the projection of a pattern onto a second part region (13) of the object (2),
**characterized by**
a device configured for the determination of the surface normals (14, 15) of the object points and configured for the association of the object points to the part regions of the object (2) in dependence on their surface normals (14, 15) such that the extensions of the surface normals which each extend to the right next to the projector are associated with the first part region and the extensions of the surface normals which each extend to the left next to the projector are associated with the second part region, wherein the part regions (12, 13) on the object (2) are selected so that they do not overlap one another or only overlap one another slightly.

6. An apparatus in accordance with claim 5, **characterized by** a device configured for the rough determination of the 3D coordinates of the object.

7. An apparatus in accordance with claim 6, **characterized by** a memory for the storing of the 3D coordinates of the object.

## Revendications

1. Procédé destiné à la détermination des coordonnées 3D d'un objet (2), lors duquel un dessin est projeté (1) sur l'objet (2) et le dessin réfléchi par l'objet (2) est enregistré (3) et analysé, lors duquel, dans une première étape, un dessin est projeté sur un premier secteur partiel (12) de l'objet (2) et le dessin réfléchi par ce secteur partiel (12) de l'objet est enregistré, dans une deuxième étape, un dessin est projeté sur un second secteur partiel (13) de l'objet (2) et le dessin réfléchi par ce secteur partiel (13) de l'objet (2) est enregistré et les dessins enregistrés sont analysés, et lors duquel les normales de surface (14, 15) des points d'objet sont déterminées,
**caractérisé en ce que**,
les points d'objet sont affectés en fonction de leurs normales de surface (14, 15) avant les première et deuxième étapes aux secteurs partiels (12, 13) de l'objet (2), la prolongation des normales de surface qui passent respectivement à droite du projecteur est affectée au premier secteur partiel et la prolongation des normales de surface qui passent respectivement à gauche du projecteur est affectée au deuxième secteur partiel et les secteurs partiels (12, 13) sur l'objet (2) étant sélectionnés de sorte qu'ils ne chevauchent pas l'un sur l'autre ou seulement de manière minime.

2. Procédé selon la revendication 1, **caractérisé en ce que** les coordonnées 3D de l'objet (2) sont définies sommairement avant la première et la seconde étape.

3. Procédé selon la revendication 2, **caractérisé en ce que** la détermination sommaire des coordonnées 3D de l'objet est réalisée du fait qu'un dessin est projeté (1) sur l'objet (2) et le dessin réfléchi par l'objet (2) est enregistré (3) et analysé.

4. Procédé selon les revendications 2 ou 3, **caractérisé en ce que** la détermination sommaire des coordonnées 3D de l'objet (2) est réalisée du fait que les coordonnées 3D de l'objet (2) sont extraites d'une mémoire.

5. Dispositif destiné à la détermination des coordonnées 3D d'un objet (2) avec un projecteur (1) destiné à la projection d'un dessin sur l'objet (2), une caméra (3) destinée à enregistrer le dessin réfléchi par l'objet (2), un dispositif d'analyse destiné à analyser le dessin enregistré et un dispositif destiné à la projection d'un dessin sur un premier secteur partiel (12) de l'objet (2) et destiné à la projection d'un dessin sur un deuxième secteur partiel (13) de l'objet (2),
**caractérisé par**
une installation configurée pour la détermination des normales de surface (14, 15) des points d'objet et configurée pour l'affectation des points d'objet aux secteurs partiels de l'objet (2) en fonction de leurs normales de surface (14, 15) de sorte que la prolongation des normales de surface qui passent respectivement à droite du projecteur est affectée au premier secteur partiel et la prolongation des normales de surface qui passent respectivement à gauche du projecteur est affectée au deuxième secteur partiel, les secteurs partiels (12, 13) sur l'objet (2) étant sélectionnés de sorte qu'ils ne chevauchent pas l'un sur l'autre ou seulement de manière minime.

6. Dispositif selon la revendication 5, **caractérisé par** une installation configurée pour la détermination sommaire des coordonnées 3D de l'objet.

7. Dispositif selon la revendication 6, **caractérisé par** une mémoire destinée à mémoriser les coordonnées 3D de l'objet.
